# EUROPEAN PATENT APPLICATION

(11) **EP 3 135 111 A1**
(43) Date of publication of application: **01.03.2017**
(21) Application number: 15779693.9
(22) Date of filing: 15.04.2015
(51) Int. Cl.: A01N 37/32, A01N 25/00, A01P 3/00

(54) **PLANT DISEASE CONTROL METHOD**

(30) Priority: 16.04.2014 JP 2014085026
(71) Applicant: Nihon Nohyaku Co., Ltd., Tokyo 104-8386 (JP)
(72) Inventor: BABA, Koji, Kawachinagano-shi Osaka 586-0094 (JP)
(74) Representative: Plougmann Vingtoft a/s
(86) International application number: PCT/JP2015/061560
(87) International publication number: WO 2015/159913

(57) **Abstract**

In consideration of the fact that control agents against leaf blotch are small in number among control agents against cereal diseases and are not sufficiently effective, the present invention is intended to provide a novel means and method for controlling leaf blotch for stable cereal production. Provided is a method for controlling leaf blotch of cereals, which method is characterized by applying an effective dose of fluoroimide to a cereal plant, soil in the vicinity of the cereal plant grown, or a seed of the cereal plant.

## Description

### TECHNICAL FIELD

The present invention relates to a method for controlling specific plant diseases which damage cereals.

### BACKGROUND ART

Disease control is very important for stable cereal production in Europe. For this purpose, a huge number of microbicides have been developed and used so far. However, the dependence on specific agrochemicals for disease control has caused the emergence of resistant pathogens, and also the tendency of disease infestation has greatly changed. The major target diseases to be controlled in the 1980s were powdery mildew, rust and glume blotch, but since the 2000s, leaf blotch has become a major disease to be controlled (see, for example, Non Patent Literature 1). Therefore, the creation of control agents against leaf blotch is one of the biggest concerns in the agrochemical industry in Europe.

Fluoroimide (see, for example, Patent Literature 1) is a known compound which is effective against diseases of fruit trees and vegetables. However, it is unknown whether fluoroimide is effective against diseases of cereals (see, for example, Patent Literature 1 and Non Patent Literature 2).

### CITATION LIST

### Patent Literature

Patent Literature 1: United States Patent No. 3734927

### Non Patent Literature

Non Patent Literature 1: European and Mediterranean Plant Protection Organization, Dec 2010, EPPO Workshop on Azole fungicides and Septoria leaf blotch control: K. Stenzel
Non Patent Literature 2: The Pesticide Manual 15th edition

### SUMMARY OF INVENTION

### TECHNICAL PROBLEM

Control agents against leaf blotch are small in number among control agents against cereal diseases and are not sufficiently effective. Therefore, the development of novel control agents against leaf blotch is desired.

### SOLUTION TO PROBLEM

The present inventor conducted extensive research to solve the above-described problems. As a result, the present inventor found that the control of leaf blotch can be achieved by application of an effective dose of fluoroimide to a cereal plant, soil in the vicinity of the cereal plant grown, or a seed of the cereal plant. Based on this finding, the present inventor completed the present invention.

The present invention relates to the following.
[1] A method for controlling plant diseases, characterized by applying an agrochemical comprising fluoroimide or an agrochemically acceptable salt thereof to a cereal plant, soil in the vicinity of the cereal plant grown, or a seed of the cereal plant.
[2] The method according to the above [1], wherein the cereal plant is wheat or barley.
[3] The method according to the above [1] or [2], wherein the application is foliar application.
[4] The method according to any of the above [1] to [3], wherein fluoroimide or a salt thereof is applied at a rate of 100 g/ha to 5000 g/ha.
[5] The method according to any of the above [1] to [4], wherein the plant disease pathogen is
   (a1) *Ascochyta tritici* (a causal agent of Ascochyta leaf spot of wheat),
   (a2) *Blumeria graminis* (a causal agent of powdery mildew of cereals),
   (a3) *Cladosporium herbarum* (a causal agent of black mold),
   (a4) *Cochliobolus sativus* (a causal agent of poaceous spot blotch),
   (a5) *Epicoccum* spp.,
   (a6) *Erysiphe graminis* (a causal agent of powdery mildew of wheat and barley),
   (a7) *Fusarium graminearum* (a causal agent of Fusarium ear blight of wheat and barley),
   (a8) *Fusarium culmorum* (a causal agent of root rot),
   (a9) *Gaeumannomyces graminis* (a causal agent of take-all root rot),
   (a10) *Leptosphaeria nodorum* (a causal agent of glume blotch),
   (a11) *Microdochium nivale* (a causal agent of pink snow mold),
   (a12) *Pseudocercospora herpotrichoides,*
   (a13) *Pseudocercosporella herpotrichoides* (a causal agent of eyespot),
   (a14) *Puccinia striiformis* (a causal agent of rust),
   (a15) *Puccinia triticina* (a causal agent of leaf rust),
   (a16) *Puccinia hordei* (a causal agent of dwarf leaf rust of barley),
   (a17) *Puccinia recondita* (a causal agent of leaf rust of wheat),
   (a18) *Pyrenophora graminea* (a causal agent of stripe),
   (a19) *Pyrenophora teres* (a causal agent of net blotch),
   (a20) *Pyrenophora tritici repentis* (a causal agent of yellow leaf spot of wheat),
   (a21) *Ramularia collo-cygni* (a causal agent of physiological leaf spots),
   (a22) *Rhizoctonia solani* (a causal agent of root rot/stem rot),
   (a23) *Rhizoctonia cerealis* (a causal agent of yellow patch),
   (a24) *Rhynchosporium secalis* (a causal agent of scald),
   (a25) *Septoria nodorum* (a causal agent of glume blotch of wheat),
   (a26) *Septoria tritici* (a causal agent of leaf blotch),
   (a27) *Stagonospora nodorum* (a species of the class Loculoascomycetes),
   (a28) *Tilletia caries* (a causal agent of stinking smut),
   (a29) *Typhula incarnata* (a causal agent of snow mold),
   (a30) *Ustilago avenae* (a causal agent of loose smut of oat) or
   (a31) *Ustilago nuda* (a causal agent of loose smut of wheat).
[6] The method according to any of the above [1] to [4], wherein the plant disease pathogen is
   (a3) *Cladosporium herbarum* (a causal agent of black mold),
   (a4) *Cochliobolus sativus* (a causal agent of poaceous spot blotch),
   (a5) *Epicoccum* spp.,
   (a7) *Fusarium graminearum* (a causal agent of Fusarium ear blight of wheat and barley),
   (a8) *Fusarium culmorum* (a causal agent of root rot),
   (a9) *Gaeumannomyces graminis* (a causal agent of take-all root rot),
   (a10) *Leptosphaeria nodorum* (a causal agent of glume blotch),
   (a11) *Microdochium nivale* (a causal agent of pink snow mold),
   (a12) *Pseudocercospora herpotrichoides,*
   (a13) *Pseudocercosporella herpotrichoides* (a causal agent of eyespot),
   (a18) *Pyrenophora graminea* (a causal agent of stripe),
   (a19) *Pyrenophora teres* (a causal agent of net blotch),
   (a20) *Pyrenophora tritici repentis* (a causal agent of yellow leaf spot of wheat),
   (a21) *Ramularia collo-cygni* (a causal agent of physiological leaf spots),
   (a24) *Rhynchosporium secalis* (a causal agent of scald),
   (a25) *Septoria nodorum* (a causal agent of glume blotch of wheat),
   (a26) *Septoria tritici* (a causal agent of leaf blotch),
   (a27) *Stagonospora nodorum* (a species of the class Loculoascomycetes),
   (a28) *Tilletia caries* (a causal agent of stinking smut),
   (a29) *Typhula incarnata* (a causal agent of snow mold),
   (a30) *Ustilago avenae* (a causal agent of loose smut of oat) or
   (a31) *Ustilago nuda* (a causal agent of loose smut of wheat).
[7] The method according to any of the above [1] to [4], wherein the plant disease pathogen is
   (a7) *Fusarium graminearum* (a causal agent of Fusarium ear blight of wheat and barley),
   (a10) *Leptosphaeria nodorum* (a causal agent of glume blotch),
   (a12) *Pseudocercospora herpotrichoides,*
   (a13) *Pseudocercosporella herpotrichoides* (a causal agent of eyespot),
   (a25) *Septoria nodorum* (a causal agent of glume blotch of wheat) or
   (a26) *Septoria tritici* (a causal agent of leaf blotch).
[8] The method according to any of the above [1] to [7], wherein the agrochemical is in a liquid form.

### ADVANTAGEOUS EFFECTS OF INVENTION

The control method according to the present invention enables the control of leaf blotch which damages cereals.

### DESCRIPTION OF EMBODIMENTS

The active ingredient used in the present invention is fluoroimide (see U.S. Patent Application No. 3734927), which can be produced by a known method. This compound is sold in the market and such a commercial product can be used. The active ingredient may be in the form of a salt, and the salt is preferably an agrochemically acceptable salt. Examples of the agrochemically acceptable salt include salts with an inorganic acid such as hydrochloric acid, hydrobromic acid, nitric acid, sulfuric acid and phosphoric acid; and salts with an organic acid such as acetic acid, phthalic acid, fumaric acid, oxalic acid, tartaric acid, maleic acid, citric acid, succinic acid, methanesulfonic acid and p-toluenesulfonic acid.

Examples of useful plants which the control method of the present invention can protect include, but are not particularly limited to, cereals (e.g., rice, barley, wheat, rye, oats, corn, etc.), legumes (e.g., soybeans, azuki beans, broad beans, green peas, kidney beans, peanuts, etc.), fruit trees and fruits (e.g., apples, citrus fruits, pears, grapes, peaches, plums, cherries, walnuts, chestnuts, almonds, bananas, etc.), leaf and fruit vegetables (e.g., cabbages, tomatoes, spinach, broccoli, lettuce, onions, welsh onions, green peppers, eggplants, strawberries, pepper crops, okra, etc.), root vegetables (e.g., carrots, potatoes, sweet potatoes, taros, Japanese radishes, turnips, lotus roots, burdock roots, garlic, etc.), crops for processing (e.g., cotton, hemp, beet, hops, sugarcane, sugar beet, olives, rubber, coffee, tobacco, tea, etc.), gourds (e.g., Japanese pumpkins, cucumbers, watermelons, oriental sweet melons, melons, etc.), pasture grass (e.g., orchardgrass, sorghum, timothy, clover, alfalfa, etc.), lawn grass (e.g., Korean lawn grass, bent grass, etc.), spice and aromatic crops and ornamental crops (e.g., lavender, rosemary, thyme, parsley, pepper, ginger, etc.), ornamental flowering plants (e.g., chrysanthemum, rose, carnation, orchid, etc.), garden trees (e.g., ginkgo trees, cherry trees, Japanese aucuba, etc.) and forest trees (e.g., *Abies sachalinensis, Picea jezoensis,* pine, yellow cedar, Japanese cedar, hinoki cypress, eucalyptus, etc.). Preferred are barley and wheat.

The above-mentioned "plants" also include plants provided with herbicide tolerance by a classical breeding technique or a gene recombination technique. Examples of such herbicide tolerance include tolerance to HPPD inhibitors, such as isoxaflutole; ALS inhibitors, such as imazethapyr and thifensulfuron-methyl; EPSP synthase inhibitors, such as glyphosate; glutamine synthetase inhibitors, such as glufosinate; acetyl-CoA carboxylase inhibitors, such as sethoxydim; or other herbicides, such as bromoxynil, dicamba and 2,4-D.

Examples of the plants provided with herbicide tolerance by a classical breeding technique include varieties of rapeseed, wheat, sunflower and rice tolerant to the imidazolinone family of ALS-inhibiting herbicides such as imazethapyr, and such plants are sold under the trade name of "Clearfield" (registered trademark). Also included is a variety of soybean provided with tolerance to the sulfonyl urea family of ALS-inhibiting herbicides such as thifensulfuron-methyl by a classical breeding technique, and this is sold under the trade name of "STS soybean". Also included are plants provided with tolerance to acetyl-CoA carboxylase inhibitors such as trione oxime herbicides and aryloxy phenoxy propionic acid herbicides by a classical breeding technique, for example, SR corn and the like.

Plants provided with tolerance to acetyl-CoA carboxylase inhibitors are described in Proc. Natl. Acad. Sci. USA, 87, 7175-7179 (1990), and the like. Further, acetyl-CoA carboxylase mutants resistant to acetyl-CoA carboxylase inhibitors are reported in Weed Science, 53, 728-746 (2005), and the like, and by introducing the gene of such an acetyl-CoA carboxylase mutant into plants by a gene recombination technique, or introducing a resistance-conferring mutation into acetyl-CoA carboxylase of plants, plants tolerant to acetyl-CoA carboxylase inhibitors can be engineered. Alternatively, by introducing a nucleic acid causing base substitution mutation into plant cells (a typical example of this technique is chimeraplasty technique (Gura T. 1999. Repairing the Genome's Spelling Mistakes. Science 285: 316-318.)) to allow site-specific substitution mutation in the amino acids encoded by an acetyl-CoA carboxylase gene, an ALS gene or the like of plants, plants tolerant to acetyl-CoA carboxylase inhibitors, ALS inhibitors or the like can be engineered. The plant disease control agent of the present invention can be applied to these plants as well.

Further, exemplary toxins expressed in genetically modified plants include insecticidal proteins of *Bacillus cereus* or *Bacillus popilliae; Bacillus thuringiensis* δ-endotoxins, such as Cry1Ab, Cry1Ac, Cry1F, Cry1Fa2, Cry2Ab, Cry3A, Cry3Bb1 and Cry9C, and other insecticidal proteins, such as VIP1, VIP2, VIP3 and VIP3A; nematode insecticidal proteins; toxins produced by animals, such as scorpion toxins, spider toxins, bee toxins and insect-specific neurotoxins; toxins of filamentous fungi; plant lectins; agglutinin; protease inhibitors, such as trypsin inhibitors, serine protease inhibitors, patatin, cystatin and papain inhibitors; ribosome inactivating proteins (RIP), such as ricin, maize RIP, abrin, luffin, saporin and bryodin; steroid metabolizing enzymes, such as 3-hydroxy steroid oxidase, ecdysteroid-UDP-glucosyltransferase and cholesterol oxidase; ecdysone inhibitors; HMG-CoA reductase; ion channel inhibitors, such as sodium channel inhibitors and calcium channel inhibitors; juvenile hormone esterase; diuretic hormone receptors; stilbene synthase; bibenzyl synthase; chitinase; and glucanase.

Also included are hybrid toxins, partially deficient toxins and modified toxins derived from the following: δ-endotoxin proteins such as Cry1Ab, Cry1Ac, Cry1F, Cry1Fa2, Cry2Ab, Cry3A, Cry3Bb1, Cry9C, Cry34Ab and Cry35Ab, and other insecticidal proteins such as VIP1, VIP2, VIP3 and VIP3A. The hybrid toxin can be produced by combining some domains of these proteins differently from the original combination in nature with the use of a recombination technique. As the partially deficient toxin, a Cry1Ab toxin in which a part of the amino acid sequence is deleted is known. In the modified toxin, one or more amino acids of a naturally occurring toxin are substituted.

Examples of the foregoing toxins and genetically modified plants capable of synthesizing these toxins are described in EP-A-0 374 753, WO 93/07278, WO 95/34656, EP-A-0 427 529, EP-A-451 878, WO 03/052073, etc. The herbicidal method of the present invention may be applied to these recombinant plants as well.

The target diseases to be controlled in the present invention are diseases which affect cereals, and examples of the targets include physiological leaf spots, *Ascochyta tritici* (leaf spot), *Blumeria graminis* (powdery mildew of cereals), *Cladosporium herbarum* (black mold), *Cochliobolus sativus* (poaceous spot blotch), *Epicoccum* spp., *Erysiphe graminis* (powdery mildew of wheat and barley), *Fusarium graminearum, Fusarium culmorum* (root rot), *Gaeumannomyces graminis* (take-all root rot), *Leptosphaeria nodorum* (glume blotch), *Microdochium nivale* (pink snow mold), physiological leaf spots, *Pseudocercospora herpotrichoides, Pseudocercosporella herpotrichoides* (eyespot), *Puccinia striiformis* (rust), *Puccinia triticina* (leaf rust), *Puccinia hordei* (dwarf leaf rust of barley), *Puccinia recondita* (leaf rust of wheat), *Pyrenophora graminea, Pyrenophora teres* (net blotch), *Pyrenophora tritici repentis, Ramularia collo-cygni* (physiological leaf spots), *Rhizoctonia solani* (root rot/stem rot), *Rhizoctonia cerealis* (yellow patch), *Rhynchosporium secalis, Septoria nodorum* (glume blotch of wheat), *Septoria tritici* (leaf blotch), *Stagonospora nodorum, Tilletia caries, Typhula incarnata* (snow mold), *Uromyces appendiculatus, Ustilago avenae* and *Ustilago nuda.*

Preferred targets to be controlled are *Cladosporium herbarum* (black mold), *Cochliobolus sativus* (poaceous spot blotch), *Epicoccum* spp., *Fusarium graminearum* (Fusarium ear blight of wheat and barley), *Fusarium culmorum* (root rot), *Gaeumannomyces graminis* (a causal agent of take-all root rot), *Leptosphaeria nodorum* (glume blotch), *Microdochium nivale* (pink snow mold), *Pseudocercospora herpotrichoides, Pseudocercosporella herpotrichoides* (eyespot), *Pyrenophora graminea* (stripe), *Pyrenophora teres* (net blotch), *Pyrenophora tritici repentis* (a causal agent of yellow leaf spot of wheat), *Ramularia collo-cygni* (physiological leaf spots), *Rhynchosporium secalis* (scald), *Septoria nodorum* (glume blotch of wheat), *Septoria tritici* (leaf blotch)*, Stagonospora nodorum, Tilletia caries* (stinking smut), *Typhula incarnata* (snow mold), *Ustilago avenae* (loose smut of oat) and *Ustilago nuda* (loose smut of wheat).

More preferred targets to be controlled are *Fusarium graminearum* (Fusarium ear blight of wheat and barley), *Leptosphaeria nodorum* (glume blotch), *Pseudocercospora herpotrichoides, Pseudocercosporella herpotrichoides* (eyespot), *Septoria nodorum* (glume blotch of wheat) and *Septoria tritici* (leaf blotch).

In the plant disease control method of the present invention, it is effective to use a formulation convenient for application, which is prepared in the usual method for preparing agrochemical formulations.

That is, the active ingredient of the present invention, i.e., fluoroimide or a salt thereof, and an appropriate inactive carrier, and if needed an adjuvant, are blended in an appropriate ratio, and through the step of dissolution, separation, suspension, mixing, impregnation, adsorption and/or adhesion, are formulated into an appropriate form for application, such as a suspension concentrate, an emulsifiable concentrate, a soluble concentrate, a wettable powder, a water-dispersible granule, a granule, a dust, a tablet and a pack.

The formulation used in the control method of the present invention can optionally contain an additive usually used for agrochemical formulations in addition to the active ingredient. Examples of the additive include carriers such as solid or liquid carriers, surfactants, dispersants, wetting agents, binders, tackifiers, thickeners, colorants, spreaders, sticking/spreading agents, antifreezing agents, anti-caking agents, disintegrants and stabilizing agents. If needed, preservatives, plant fragments, etc. may also be used as the additive. One of these additives may be used alone, or two or more of them may be used in combination.

Examples of the solid carriers include natural minerals, such as quartz, clay, kaolinite, pyrophyllite, sericite, talc, bentonite, acid clay, attapulgite, zeolite and diatomite; inorganic salts, such as calcium carbonate, ammonium sulfate, sodium sulfate and potassium chloride; organic solid carriers, such as synthetic silicic acid, synthetic silicates, starch, cellulose and plant powders (for example, sawdust, coconut shell, corn cob, tobacco stalk, etc.); plastics carriers, such as polyethylene, polypropylene and polyvinylidene chloride; urea; hollow inorganic materials; hollow plastic materials; and fumed silica (white carbon). One of these solid carriers may be used alone, or two or more of them may be used in combination.

Examples of the liquid carriers include alcohols including monohydric alcohols, such as methanol, ethanol, propanol, isopropanol and butanol, and polyhydric alcohols, such as ethylene glycol, diethylene glycol, propylene glycol, hexylene glycol, polyethylene glycol, polypropylene glycol and glycerin; polyol compounds, such as propylene glycol ether; ketones, such as acetone, methyl ethyl ketone, methyl isobutyl ketone, diisobutyl ketone and cyclohexanone; ethers, such as ethyl ether, dioxane, ethylene glycol monoethyl ether, dipropyl ether and tetrahydrofuran; aliphatic hydrocarbons, such as normal paraffin, naphthene, isoparaffin, kerosene and mineral oil; aromatic hydrocarbons, such as benzene, toluene, xylene, solvent naphtha and alkyl naphthalene; halogenated hydrocarbons, such as dichloromethane, chloroform and carbon tetrachloride; esters, such as ethyl acetate, diisopropyl phthalate, dibutyl phthalate, dioctyl phthalate and dimethyl adipate; lactones, such as γ-butyrolactone; amides, such as dimethylformamide, diethylformamide, dimethylacetamide and N-alkyl pyrrolidinone; nitriles, such as acetonitrile; sulfur compounds, such as dimethyl sulfoxide; vegetable oils, such as soybean oil, rapeseed oil, cotton seed oil and castor oil; and water. One of these liquid carriers may be used alone, or two or more of them may be used in combination.

Exemplary surfactants used as the dispersant or the wetting/spreading agent include nonionic surfactants, such as sorbitan fatty acid ester, polyoxyethylene sorbitan fatty acid ester, sucrose fatty acid ester, polyoxyethylene fatty acid ester, polyoxyethylene resin acid ester, polyoxyethylene fatty acid diester, polyoxyethylene alkyl ether, polyoxyethylene alkyl aryl ether, polyoxyethylene alkyl phenyl ether, polyoxyethylene dialkyl phenyl ether, polyoxyethylene alkyl phenyl ether-formaldehyde condensates, polyoxyethylene-polyoxypropylene block copolymers, polystyrene-polyoxyethylene block polymers, alkyl polyoxyethylene-polypropylene block copolymer ether, polyoxyethylene alkylamine, polyoxyethylene fatty acid amide, polyoxyethylene fatty acid bis(phenyl ether), polyalkylene benzyl phenyl ether, polyoxyalkylene styryl phenyl ether, acetylene diol, polyoxyalkylene-added acetylene diol, polyoxyethylene ether-type silicone, ester-type silicone, fluorosurfactants, polyoxyethylene castor oil and polyoxyethylene hydrogenated castor oil; anionic surfactants, such as alkyl sulfates, polyoxyethylene alkyl ether sulfates, polyoxyethylene alkyl phenyl ether sulfates, polyoxyethylene styryl phenyl ether sulfates, alkylbenzene sulfonates, alkylaryl sulfonates, lignosulfonates, alkyl sulfosuccinates, naphthalene sulfonates, alkylnaphthalene sulfonates, salts of naphthalenesulfonic acid-formaldehyde condensates, salts of alkylnaphthalenesulfonic acid-formaldehyde condensates, fatty acid salts, polycarboxylic acid salts, polyacrylates, N-methyl-fatty acid sarcosinates, resinates, polyoxyethylene alkyl ether phosphates and polyoxyethylene alkyl phenyl ether phosphates; cationic surfactants including alkyl amine salts, such as lauryl amine hydrochloride, stearyl amine hydrochloride, oleyl amine hydrochloride, stearyl amine acetate, stearyl aminopropyl amine acetate, alkyl trimethyl ammonium chloride and alkyl dimethyl benzalkonium chloride; and amphoteric surfactants, such as amino acid-type or betaine-type amphoteric surfactants. One of these surfactants may be used alone, or two or more of them may be used in combination.

Examples of the binders or the tackifiers include carboxymethyl cellulose or salts thereof, dextrin, soluble starch, xanthan gum, guar gum, sucrose, polyvinyl pyrrolidone, gum arabic, polyvinyl alcohol, polyvinyl acetate, sodium polyacrylate, polyethylene glycols with an average molecular weight of 6,000 to 20,000, polyethylene oxides with an average molecular weight of 100,000 to 5,000,000, phospholipids (for example, cephalin, lecithin, etc.), cellulose powder, dextrin, modified starch, polyaminocarboxylic acid chelating compounds, cross-linked polyvinyl pyrrolidone, maleic acid-styrene copolymers, (meth)acrylic acid copolymers, half esters of polyhydric alcohol polymer and dicarboxylic anhydride, water soluble polystyrene sulfonates, paraffin, terpene, polyamide resins, polyacrylates, polyoxyethylene, waxes, polyvinyl alkyl ether, alkylphenol-formaldehyde condensates and synthetic resin emulsions.

Examples of the thickeners include water soluble polymers, such as xanthan gum, guar gum, diutan gum, carboxymethyl cellulose, polyvinyl pyrrolidone, carboxyvinyl polymers, acrylic polymers, starch derivatives and polysaccharides; and inorganic fine powders, such as high grade bentonite and fumed silica (white carbon).

Examples of the colorants include inorganic pigments, such as iron oxide, titanium oxide and Prussian blue; and organic dyes, such as alizarin dyes, azo dyes and metal phthalocyanine dyes.

Examples of the antifreezing agents include polyhydric alcohols, such as ethylene glycol, diethylene glycol, propylene glycol and glycerin.

Examples of the adjuvants serving to prevent caking or facilitate disintegration include polysaccharides (starch, alginic acid, mannose, galactose, etc.), polyvinyl pyrrolidone, fumed silica (white carbon), ester gum, petroleum resin, sodium tripolyphosphate, sodium hexametaphosphate, metal stearates, cellulose powder, dextrin, methacrylate copolymers, polyvinyl pyrrolidone, polyaminocarboxylic acid chelating compounds, sulfonated styrene-isobutylene-maleic anhydride copolymers and starch-polyacrylonitrile graft copolymers.

Examples of the stabilizing agents include desiccants, such as zeolite, quicklime and magnesium oxide; antioxidants, such as phenolic compounds, amine compounds, sulfur compounds and phosphoric acid compounds; and ultraviolet absorbers, such as salicylic acid compounds and benzophenone compounds.

Examples of the preservatives include potassium sorbate and 1,2-benzothiazolin-3-one.

Further, other adjuvants including functional spreading agents, activity enhancers such as metabolic inhibitors (piperonyl butoxide etc.), antifreezing agents (propylene glycol etc.), antioxidants (BHT etc.) and ultraviolet absorbers can also be used if needed.

The amount of the active ingredient compound in the formulation can be adjusted as needed, and basically, the amount of the active ingredient compound is appropriately selected from the range of 0.1 to 90 parts by weight in 100 parts by weight of the formulation. For example, in the case where the formulation is a dust, a granule, an emulsifiable concentrate or a wettable powder, it is suitable that the amount of the active ingredient compound is 1 to 70 parts by weight.

The application rate of the formulation may vary with various factors, for example, the purpose, the target disease, the growing conditions of crops, the tendency of disease infestation, the weather, the environmental conditions, the dosage form, the application method, the application site, the application timing, etc., but basically, the application rate of the active ingredient compound is appropriately selected from the range of 1 g to 10 kg, and preferably 100 g to 5000 g per hectare depending on the purpose.

In order to control target diseases by the plant disease control method of the present invention, the formulation, with or without appropriate dilution or suspension in water etc., is applied to plants potentially infested with the target diseases in an amount effective for the control of the diseases. For example, in order to control diseases that may affect crop plants such as cereals, fruit trees and vegetables, foliar application and seed treatment such as dipping, dust coating and calcium peroxide coating can be performed. Further, treatment of soil or the like may also be performed to allow plants to absorb agrochemicals through their roots. Examples of such treatment include whole soil incorporation, planting row treatment, bed soil incorporation, plug seedling treatment, planting hole treatment, plant foot treatment, top-dressing, treatment of nursery boxes for paddy rice, and submerged application. In addition, application to culture media in hydroponics, smoking treatment, trunk injection and the like can also be performed. Preferred is foliar application.

Exemplary methods of seed treatment include dipping of seeds in a diluted or undiluted fluid of a liquid or solid formulation for the permeation of agrochemicals into the seeds; mixing or dust coating of seeds with a solid or liquid formulation for the adherence of the formulation onto the surfaces of the seeds; coating of seeds with a mixture of a solid or liquid formulation and an adhesive carrier such as resins and polymers; and application of a solid or liquid formulation to the vicinity of seeds at the same time as seeding.

The term "seed" in the above-mentioned seed treatment refers to a plant body which is in the early stages of cultivation and used for plant propagation. The examples include, in addition to a so-called seed, a plant body for vegetative propagation, such as a bulb, a tuber, a seed potato, a bulbil, a propagule, a discoid stem and a stem used for cuttage.

The term "soil" or "cultivation medium" in the method for using the control agent of the present invention refers to a support medium for crop cultivation, in particular a support medium which allows crop plants to spread their roots therein, and the materials are not particularly limited as long as they allow plants to grow. Examples of the support medium include what is called soils, seedling mats and water, and specific examples of the materials include sand, pumice, vermiculite, diatomite, agar, gelatinous substances, high-molecular-weight substances, rock wool, glass wool, wood chip and bark.

Exemplary methods of application to crop foliage etc. include application of a liquid formulation, such as an emulsifiable concentrate and a flowable, or a solid formulation, such as a wettable powder and a water-dispersible granule, after appropriate dilution in water; and dust application.

Exemplary methods of soil application include application of a water-diluted or undiluted liquid formulation to the foot of plants, nursery beds for seedlings, or the like; application of a granule to the foot of plants, nursery beds for seedlings, or the like; application of a dust, a wettable powder, a water-dispersible granule, a granule or the like onto soil and subsequent incorporation of the formulation into the whole soil before seeding or transplanting; and application of a dust, a wettable powder, a water-dispersible granule, a granule or the like to planting holes, planting rows or the like before seeding or planting.

To nursery boxes for paddy rice, for example, a dust, a water-dispersible granule, a granule or the like can be applied, although the suitable formulation may vary depending on the application timing, in other words, depending on the cultivation stage such as seeding time, greening period and planting time. A formulation such as a dust, a water-dispersible granule, a granule or the like may be mixed with nursery soil. For example, such a formulation is incorporated into bed soil, covering soil or the whole soil. Simply, nursery soil and such a formulation may be alternately layered.

In the application to paddy fields, a solid formulation, such as a jumbo, a pack, a granule and a water-dispersible granule, or a liquid formulation, such as a flowable and an emulsifiable concentrate, is applied usually to flooded paddy fields. In a rice planting period, a suitable formulation, as it is or after mixed with a fertilizer or the like, may be applied onto soil or injected into soil. In addition, a solution of an emulsifiable concentrate, a flowable or the like may be applied to the source of water supply for paddy fields, such as a water inlet and an irrigation device. In this case, treatment can be accomplished with the supply of water and thus achieved in a labor-saving manner. The fluoroimide-containing formulation can be produced by a known method for preparing a solid, liquid or gaseous formulation.

In the case of field crops, their seeds, cultivation media in the vicinity of their plants, or the like may be treated in the period of seeding to seedling culture. In the case of plants of which the seeds are directly sown in the field, in addition to direct seed treatment, plant foot treatment during cultivation is preferable. Specifically, the treatment can be performed by, for example, applying a granule onto soil, or drenching soil with a formulation in a water-diluted or undiluted liquid form. Another available treatment is incorporation of a granule into cultivation media before seeding.

In the case of culture plants to be transplanted, preferable examples of the treatment in the period of seeding to seedling culture include, in addition to direct seed treatment, drench treatment of nursery beds for seedlings with a formulation in a liquid form; and granule application to nursery beds for seedlings. Also included are treatment of planting holes with a granule; and incorporation of a granule into cultivation media in the vicinity of planting points at the time of fix planting.

Exemplary methods of soil application include application of a water-diluted or undiluted liquid or solid formulation to the vicinity of planting points, nursery beds for seedlings, or the like; application of a granule to the vicinity of planting points or nursery beds; application of a dust, a wettable powder, a water-dispersible granule, a granule or the like onto soil and subsequent incorporation of the formulation into the whole soil before seeding or transplanting; and application of a dust, a wettable powder, a water-dispersible granule, a granule or the like to planting holes, planting rows or the like before seeding or planting.

To nursery boxes for paddy rice, for example, a dust, a water-dispersible granule, a granule or the like can be applied, although the suitable formulation may vary depending on the application timing, in other words, depending on the cultivation stage such as seeding time, greening period and planting time. A formulation such as a dust, a water-dispersible granule, a granule or the like may be mixed with nursery soil. For example, such a formulation is incorporated into bed soil, covering soil or the whole soil. Simply, nursery soil and such a formulation may be alternately layered. In the application at the seeding time, the timing of the application may be before, at the same time as, or after seeding, or after covering with soil.

Furthermore, for the expansion of the range of target diseases and the appropriate time for disease control, or for dose reduction, the formulation can be used after mixed with other insecticides, acaricides, nematicides, microbicides, biopesticides and/or the like. Further, the formulation can be used after mixed with herbicides, plant growth regulators, fertilizers and/or the like depending on the situation.

Examples of such additional insecticides, acaricides and nematicides used for the above-mentioned purposes include 3,5-xylyl methylcarbamate (XMC), crystalline protein toxins produced by *Bacillus thuringiensis* such as *Bacillus thuringiensis aizawai, Bacillus thuringiensis israelensis, Bacillus thuringiensis japonensis, Bacillus thuringiensis kurstaki* and *Bacillus thuringiensis tenebrionis,* BPMC, Bt toxin-derived insecticidal compounds, chlorfenson (CPCBS), dichlorodiisopropyl ether (DCIP), 1,3-dichloropropene (D-D), DDT, NAC, O-4-dimethylsulfamoylphenyl O,O-diethyl phosphorothioate (DSP), O-ethyl O-4-nitrophenyl phenylphosphonothioate (EPN), tripropylisocyanurate (TPIC), acrinathrin, azadirachtin, azinphos-methyl, acequinocyl, acetamiprid, acetoprole, acephate, abamectin, avermectin-B, amidoflumet, amitraz, alanycarb, aldicarb, aldoxycarb, aldrin, alpha-endosulfan, alpha-cypermethrin, albendazole, allethrin, isazofos, isamidofos, isoamidofos, isoxathion, isofenphos, isoprocarb (MIPC), ivermectin, imicyafos, imidacloprid, imiprothrin, indoxacarb, esfenvalerate, ethiofencarb, ethion, ethiprole, etoxazole, ethofenprox, ethoprophos, etrimfos, emamectin, emamectin-benzoate, endosulfan, empenthrin, oxamyl, oxydemeton-methyl, oxydeprofos (ESP), oxibendazole, oxfendazole, potassium oleate, sodium oleate, cadusafos, cartap, carbaryl, carbosulfan, carbofuran, gamma-cyhalothrin, xylylcarb, quinalphos, kinoprene, chinomethionat,
cloethocarb, clothianidin, clofentezine, chromafenozide, chlorantraniliprole, chlorethoxyfos, chlordimeform, chlordane, chlorpyrifos, chlorpyrifos-methyl, chlorphenapyr, chlorfenson, chlorfenvinphos, chlorfluazuron, chlorobenzilate, chlorobenzoate, kelthane (dicofol), salithion, cyanophos (CYAP), diafenthiuron, diamidafos, cyantraniliprole, theta-cypermethrin, dienochlor, cyenopyrafen, dioxabenzofos, diofenolan, sigma-cypermethrin, dichlofenthion (ECP), cycloprothrin, dichlorvos (DDVP), disulfoton, dinotefuran, cyhalothrin, cyphenothrin, cyfluthrin, diflubenzuron, cyflumetofen, diflovidazin, cyhexatin, cypermethrin, dimethylvinphos, dimethoate, dimefluthrin, silafluofen, cyromazine, spinetoram, spinosad, spirodiclofen, spirotetramat, spiromesifen, sulfluramid, sulprofos, sulfoxaflor, zeta-cypermethrin, diazinon, tau-fluvalinate, dazomet, thiacloprid, thiamethoxam, thiodicarb, thiocyclam, thiosultap, thiosultap-sodium, thionazin, thiometon, deet, dieldrin, tetrachlorvinphos, tetradifon, tetramethylfluthrin, tetramethrin, tebupirimfos, tebufenozide, tebufenpyrad, tefluthrin, teflubenzuron, demeton-S-methyl, temephos, deltamethrin, terbufos, tralopyril, tralomethrin, transfluthrin, triazamate, triazuron, trichlamide, trichlorphon (DEP), triflumuron, tolfenpyrad,
naled (BRP), nithiazine, nitenpyram, novaluron, noviflumuron, hydroprene, vaniliprole, vamidothion, parathion, parathion-methyl, halfenprox, halofenozide, bistrifluron, bisultap, hydramethylnon, hydroxy propyl starch, binapacryl, bifenazate, bifenthrin, pymetrozine, pyraclofos, pyrafluprole, pyridafenthion, pyridaben, pyridalyl, pyrifluquinazon, pyriprole, pyriproxyfen, pirimicarb, pyrimidifen, pirimiphos-methyl, pyrethrins, fipronil, fenazaquin, fenamiphos, bromopropylate, fenitrothion (MEP), fenoxycarb, fenothiocarb, phenothrin, fenobucarb, fensulfothion, fenthion (MPP), phenthoate (PAP), fenvalerate, fenpyroximate, fenpropathrin, fenbendazole, fosthiazate, formetanate, butathiofos, buprofezin, furathiocarb, prallethrin, fluacrypyrim, fluazinam, fluazuron, fluensulfone, flucycloxuron, flucythrinate, fluvalinate, flupyrazofos, flufenerim, flufenoxuron, flufenzine, flufenprox, fluproxyfen, flubrocythrinate, flubendiamide, flumethrin, flurimfen, prothiofos, protrifenbute, flonicamid, propaphos, propargite (BPPS), profenofos, profluthrin, propoxur (PHC), bromopropylate, beta-cyfluthrin, hexaflumuron, hexythiazox, heptenophos, permethrin, benclothiaz, bendiocarb, bensultap, benzoximate, benfuracarb, phoxim, phosalone, fosthiazate, fosthietan, phosphamidon, phosphocarb, phosmet (PMP), polynactins, formetanate, formothion, phorate,
machine oil, malathion, milbemycin, milbemycin-A, milbemectin, mecarbam, mesulfenfos, methomyl, metaldehyde, metaflumizone, methamidophos, metam-ammonium, metam-sodium, methiocarb, methidathion (DMTP), methylisothiocyanate, methylneodecanamide, methylparathion, metoxadiazone, methoxychlor, methoxyfenozide, metofluthrin, methoprene, metolcarb, meperfluthrin, mevinphos, monocrotophos, monosultap, lambda-cyhalothrin, ryanodine, lufenuron, resmethrin, lepimectin, rotenone, levamisole hydrochloride, fenbutatin oxide, morantel tartarate, methyl bromide, tricyclohexyltin hydroxide (cyhexatin), calcium cyanamide, calcium polysulfide, sulfur and nicotine-sulfate.

Examples of the agricultural and horticultural microbicides used for the same purposes as above include aureofungin, azaconazole, azithiram, acypetacs, acibenzolar, acibenzolar-S-methyl, azoxystrobin, anilazine, amisulbrom, ampropylfos, ametoctradin, allyl alcohol, aldimorph, amobam, isotianil, isovaledione, isopyrazam, isoprothiolane, ipconazole, iprodione, iprovalicarb, iprobenfos, imazalil, iminoctadine, iminoctadine-albesilate, iminoctadine-triacetate, imibenconazole, uniconazole, uniconazole-P, echlomezole, edifenphos, etaconazole, ethaboxam, ethirimol, etem, ethoxyquin, etridiazole, enestroburin, epoxiconazole, oxadixyl, oxycarboxin, copper-8-quinolinolate, oxytetracycline, copper-oxinate, oxpoconazole, oxpoconazole-fumarate, oxolinic acid, octhilinone, ofurace, orysastrobin, soil fungicides such as metam-sodium, kasugamycin, carbamorph, carpropamid, carbendazim, carboxin, carvone,
quinazamid, quinacetol, quinoxyfen, quinomethionate, captafol, captan, kiralaxyl, quinconazole, quintozene, guazatine, cufraneb, cuprobam, glyodin, griseofulvin, climbazole, cresol, kresoxim-methyl, chlozolinate, clotrimazole, chlobenthiazone, chloraniformethan, chloranil, chlorquinox, chloropicrin, chlorfenazole, chlorodinitronaphthalene, chlorothalonil, chloroneb, zarilamid, salicylanilide, cyazofamid, diethyl pyrocarbonate, diethofencarb, cyclafuramid, diclocymet, dichlozoline, diclobutrazol, dichlofluanid, cycloheximide, diclomezine, dicloran, dichlorophen, dichlone, disulfiram, ditalimfos, dithianon, diniconazole, diniconazole-M, zineb, dinocap, dinocton, dinosulfon, dinoterbon, dinobuton, dinopenton, dipyrithione, diphenylamine, difenoconazole, cyflufenamid, diflumetorim, cyproconazole, cyprodinil, phenylamide compounds such as cyprofuram, cypendazole, simeconazole, dimethirimol, dimethomorph, cymoxanil, dimoxystrobin, methyl bromide, ziram, silthiofam, streptomycin, spiroxamine, sultropen, sedaxane, zoxamide, dazomet, thiadiazin, tiadinil, thiadifluor, thiabendazole, tioxymid, thiochlorfenphim, thiophanate, thiophanate-methyl, thicyofen, thioquinox, chinomethionat, thifluzamide, thiram, decafentin, tecnazene, tecloftalam, tecoram, tetraconazole, debacarb, dehydroacetic acid, tebuconazole, tebufloquin, dodicin, dodine, dodecyl benzensulfonate bis-ethylene diamine copper(II) (DBEDC), dodemorph, drazoxolon, triadimenol, triadimefon, triazbutil, triazoxide, triamiphos, triarimol, trichlamide, tricyclazole, triticonazole, tridemorph, tributyltin oxide, triflumizole, trifloxystrobin, triforine, tolylfluanid, tolclofos-methyl,
natamycin, nabam, nitrothal-isopropyl, nitrostyrene, nuarimol, copper nonylphenol sulfonate, halacrinate, validamycin, valifenalate, harpin protein, bixafen, picoxystrobin, picobenzamide, bithionol, bitertanol, hydroxyisoxazole, hydroxyisoxazole-potassium, binapacryl, biphenyl, piperalin, hymexazol, pyraoxystrobin, pyracarbolid, pyraclostrobin, pyrazophos, pyrametostrobin, pyriofenone, pyridinitril, pyrifenox, pyribencarb, pyrimethanil, pyroxychlor, pyroxyfur, pyroquilon, vinclozolin, famoxadone, fenapanil, fenamidone, fenaminosulf, fenarimol, fenitropan, fenoxanil, ferimzone, ferbam, fentin, fenpiclonil, fenpyrazamine, fenbuconazole, fenfuram, fenpropidin, fenpropimorph, fenhexamid, phthalide, buthiobate, butylamine, bupirimate, fuberidazole, blasticidin-S, furametpyr, furalaxyl, fluacrypyrim, fluazinam, fluoxastrobin, fluotrimazole, fluopicolide, fluopyram, furcarbanil, fluxapyroxad, fluquinconazole, furconazole, furconazole-cis, fludioxonil, flusilazole, flusulfamide, flutianil, flutolanil, flutriafol, furfural, furmecyclox, flumetover, flumorph, proquinazid, prochloraz, procymidone, prothiocarb, prothioconazole, propamocarb, propiconazole, propineb, furophanate, probenazole, bromuconazole,
hexachlorobutadiene, hexaconazole, hexylthiofos, bethoxazin, benalaxyl, benalaxyl-M, benodanil, benomyl, pefurazoate, benquinox, penconazole, benzamorf, pencycuron, benzohydroxamic acid, bentaluron, benthiazole, benthiavalicarb-isopropyl, penthiopyrad, penflufen, boscalid, phosdiphen, fosetyl, fosetyl-Al, polyoxins, polyoxorim, polycarbamate, folpet, formaldehyde, machine oil, maneb, mancozeb, mandipropamid, myclozolin, myclobutanil, mildiomycin, milneb, mecarbinzid, methasulfocarb, metazoxolon, metam, metam-sodium, metalaxyl, metalaxyl-M, metiram, methyl isothiocyanate, meptyldinocap, metconazole, metsulfovax, methfuroxam, metominostrobin, metrafenone, mepanipyrim, mefenoxam, meptyldinocap, mepronil, mebenil, iodomethane, rabenzazole, benzalkonium chloride, basic copper chloride, basic copper sulfate, inorganic microbicides such as silver, sodium hypochlorite, cupric hydroxide, wettable sulfur, calcium polysulfide, potassium hydrogen carbonate, sodium hydrogen carbonate, sulfur, copper sulfate anhydride, nickel dimethyldithiocarbamate, copper compounds such as oxine copper, zinc sulfate and copper sulfate pentahydrate.

Further, examples of the herbicides include 1-naphthylacetamide, 2,4-PA, 2,3,6-TBA, 2,4,5-T, 2,4,5-TB, 2,4-D, 2,4-DB, 2,4-DEB, 2,4-DEP, 3,4-DA, 3,4-DB, 3,4-DP, 4-CPA, 4-CPB, 4-CPP, MCP, MCPA, MCPA-thioethyl, MCPB, ioxynil, aclonifen, azafenidin, acifluorfen, aziprotryne, azimsulfuron, asulam, acetochlor, atrazine, atraton, anisuron, anilofos, aviglycine, abscisic acid, amicarbazone, amidosulfuron, amitrole, aminocyclopyrachlor, aminopyralid, amibuzin, amiprophos-methyl, ametridione, ametryn, alachlor, allidochlor, alloxydim, alorac, isouron, isocarbamid, isoxachlortole, isoxapyrifop, isoxaflutole, isoxaben, isocil, isonoruron, isoproturon, isopropalin, isopolinate, isomethiozin, inabenfide, ipazine, ipfencarbazone, iprymidam, imazaquin, imazapic, imazapyr, imazamethapyr, imazamethabenz, imazamethabenz-methyl, imazamox, imazethapyr, imazosulfuron, indaziflam, indanofan, indolebutyric acid, uniconazole-P, eglinazine, esprocarb, ethametsulfuron, ethametsulfuron-methyl, ethalfluralin, ethiolate, ethychlozate-ethyl, ethidimuron, etinofen, ethephon, ethoxysulfuron, ethoxyfen, etnipromid, ethofumesate, etobenzanid, epronaz, erbon, endothal, oxadiazon, oxadiargyl, oxaziclomefone, oxasulfuron, oxapyrazon, oxyfluorfen, oryzalin, orthosulfamuron, orbencarb,
cafenstrole, cambendichlor, carbasulam, carfentrazone, carfentrazone-ethyl, karbutilate, carbetamide, carboxazole, quizalofop, quizalofop-P, quizalofop-ethyl, xylachlor, quinoclamine, quinonamid, quinclorac, quinmerac, cumyluron, cliodinate, glyphosate, glufosinate, glufosinate-P, credazine, clethodim, cloxyfonac, clodinafop, clodinafop-propargyl, chlorotoluron, clopyralid, cloproxydim, cloprop, chlorbromuron, clofop, clomazone, chlomethoxynil, chlomethoxyfen, clomeprop, chlorazifop, chlorazine, cloransulam, chloranocryl, chloramben, cloransulam-methyl, chloridazon, chlorimuron, chlorimuron-ethyl, chlorsulfuron, chlorthal, chlorthiamid, chlortoluron, chlornitrofen, chlorfenac, chlorfenprop, chlorbufam, chlorflurazole, chlorflurenol, chlorprocarb, chlorpropham, chlormequat, chloreturon, chloroxynil, chloroxuron, chloropon, saflufenacil, cyanazine, cyanatryn, di-allate, diuron, diethamquat, dicamba, cycluron, cycloate, cycloxydim, diclosulam, cyclosulfamuron, dichlorprop, dichlorprop-P, dichlobenil, diclofop, diclofop-methyl, dichlormate, dichloralurea, diquat, cisanilide, disul, siduron, dithiopyr, dinitramine, cinidon-ethyl, dinosam, cinosulfuron, dinoseb, dinoterb, dinofenate, dinoprop, cyhalofop-butyl, diphenamid, difenoxuron, difenopenten, difenzoquat, cybutryne, cyprazine, cyprazole, diflufenican, diflufenzopyr, dipropetryn, cypromid, cyperquat, gibberellin, simazine, dimexano, dimethachlor, dimidazon, dimethametryn, dimethenamid, simetryn, simeton, dimepiperate, dimefuron, cinmethylin,
swep, sulglycapin, sulcotrione, sulfallate, sulfentrazone, sulfosulfuron, sulfometuron, sulfometuron-methyl, secbumeton, sethoxydim, sebuthylazine, terbacil, daimuron, dazomet, dalapon, thiazafluron, thiazopyr, thiencarbazone, thiencarbazone-methyl, tiocarbazil, tioclorim, thiobencarb, thidiazimin, thidiazuron, thifensulfuron, thifensulfuron-methyl, desmedipham, desmetryn, tetrafluron, thenylchlor, tebutam, tebuthiuron, terbumeton, tepraloxydim, tefuryltrione, tembotrione, delachlor, terbacil, terbucarb, terbuchlor, terbuthylazine, terbutryn, topramezone, tralkoxydim, triaziflam, triasulfuron, tri-allate, trietazine, tricamba, triclopyr, tridiphane, tritac, tritosulfuron, triflusulfuron, triflusulfuron-methyl, trifluralin, trifloxysulfuron, tripropindan, tribenuron-methyl, tribenuron, trifop, trifopsime, trimeturon,
naptalam, naproanilide, napropamide, nicosulfuron, nitralin, nitrofen, nitrofluorfen, nipyraclofen, neburon, norflurazon, noruron, barban, paclobutrazol, paraquat, parafluron, haloxydine, haloxyfop, haloxyfop-P, haloxyfop-methyl, halosafen, halosulfuron, halosulfuron-methyl, picloram, picolinafen, bicyclopyrone, bispyribac, bispyribac-sodium, pydanon, pinoxaden, bifenox, piperophos, hymexazol, pyraclonil, pyrasulfotole, pyrazoxyfen, pyrazosulfuron, pyrazosulfuron-ethyl, pyrazolate, bilanafos, pyraflufen-ethyl, pyriclor, pyridafol, pyrithiobac, pyrithiobac-sodium, pyridate, pyriftalid, pyributicarb, pyribenzoxim, pyrimisulfan, primisulfuron, pyriminobac-methyl, pyroxasulfone, pyroxsulam, fenasulam, phenisopham, fenuron, fenoxasulfone, fenoxaprop, fenoxaprop-P, fenoxaprop-ethyl, phenothiol, fenoprop, phenobenzuron, fenthiaprop, fenteracol, fentrazamide, phenmedipham, phenmedipham-ethyl, butachlor, butafenacil, butamifos, buthiuron, buthidazole, butylate, buturon, butenachlor, butroxydim, butralin, flazasulfuron, flamprop, furyloxyfen, prynachlor, primisulfuron-methyl, fluazifop, fluazifop-P, fluazifop-butyl, fluazolate, fluroxypyr, fluothiuron, fluometuron, fluoroglycofen, flurochloridone, fluorodifen, fluoronitrofen, fluoromidine, flucarbazone, flucarbazone-sodium, fluchloralin, flucetosulfuron, fluthiacet, fluthiacet-methyl, flupyrsulfuron, flufenacet, flufenican, flufenpyr, flupropacil, flupropanate, flupoxam, flumioxazin, flumiclorac, flumiclorac-pentyl, flumipropyn, flumezin, fluometuron, flumetsulam, fluridone, flurtamone, fluroxypyr, pretilachlor, proxan, proglinazine, procyazine, prodiamine, prosulfalin, prosulfuron, prosulfocarb, propaquizafop, propachlor, propazine, propanil, propyzamide, propisochlor, prohydrojasmon, propyrisulfuron, propham, profluazol, profluralin, prohexadione-calcium, propoxycarbazone, propoxycarbazone-sodium, profoxydim, bromacil, brompyrazon, prometryn, prometon, bromoxynil, bromofenoxim, bromobutide, bromobonil, florasulam,
hexachloroacetone, hexazinone, pethoxamid, benazolin, penoxsulam, pebulate, beflubutamid, vernolate, perfluidone, bencarbazone, benzadox, benzipram, benzylaminopurine, benzthiazuron, benzfendizone, bensulide, bensulfuron-methyl, benzoylprop, benzobicyclon, benzofenap, benzofluor, bentazone, pentanochlor, benthiocarb, pendimethalin, pentoxazone, benfluralin, benfuresate, fosamine, fomesafen, foramsulfuron, forchlorfenuron, maleic hydrazide, mecoprop, mecoprop-P, medinoterb, mesosulfuron, mesosulfuron-methyl, mesotrione, mesoprazine, methoprotryne, metazachlor, methazole, metazosulfuron, methabenzthiazuron, metamitron, metamifop, metam, methalpropalin, methiuron, methiozolin, methiobencarb, methyldymron, metoxuron, metosulam, metsulfuron, metsulfuron-methyl, metflurazon, metobromuron, metobenzuron, methometon, metolachlor, metribuzin, mepiquat-chloride, mefenacet, mefluidide, monalide, monisouron, monuron, monochloroacetic acid, monolinuron, molinate, morfamquat, iodosulfuron, iodosulfuron-methyl-sodium, iodobonil, iodomethane, lactofen, linuron, rimsulfuron, lenacil, rhodethanil, calcium peroxide and methyl bromide.

Examples of the biopesticides include viral formulations such as nuclear polyhedrosis viruses (NPV), granulosis viruses (GV), cytoplasmic polyhedrosis viruses (CPV) and entomopox viruses (EPV); microbial pesticides used as an insecticide or a nematicide, such as *Monacrosporium phymatophagum, Steinernema carpocapsae, Steinernema kushidai* and *Pasteuria penetrans;* microbial pesticides used as a microbicide, such as *Trichoderma lignorum, Agrobacterium radiobactor,* avirulent *Erwinia carotovora* and *Bacillus subtilis;* and biopesticides used as a herbicide, such as *Xanthomonas campestris.* A combined use of the formulation of the present invention with the foregoing biopesticide as a mixture can be expected to provide the same effect as above.

Other examples of the biopesticides include natural predators such as *Encarsia formosa, Aphidius colemani, Aphidoletes aphidimyza, Diglyphus isaea, Dacnusa sibirica, Phytoseiulus persimilis, Amblyseius cucumeris* and *Orius sauteri;* microbial pesticides such as *Beauveria brongniartii;* and pheromones such as (Z)-10-tetradecenyl acetate, (E,Z)-4,10-tetradecadienyl acetate, (Z)-8-dodecenyl acetate, (Z)-11-tetradecenyl acetate, (Z)-13-icosen-10-one and 14-methyl-1-octadecene.

Hereinafter, the present invention will be illustrated by Examples and Test Examples, but the present invention is not limited thereto.

### EXAMPLES

**Formulation Example 1**

| | |
|---|---|
| Fluoroimide | 15 parts by mass |
| Hydrous silicic acid | 30 parts by mass |
| HITENOL N08 (manufactured by Dai-Ichi Kogyo Seiyaku Co., Ltd.) | 5 parts by mass |
| Calcium lignosulfonate | 3 parts by mass |
| Clay for wettable powders | 47 parts by mass |

The active ingredient is impregnated with hydrous silicic acid, and then uniformly mixed with the other ingredients to give a wettable powder formulation.

**Formulation Example 2**

| | |
|---|---|
| Fluoroimide | 10 parts by mass |
| Mixture of bentonite powder and clay powder | 85 parts by mass |
| Calcium lignosulfonate | 5 parts by mass |

The above ingredients are uniformly mixed. After addition of an appropriate volume of water, the mixture is kneaded, granulated and dried to give a granular formulation.

**Formulation Example 3**

| | |
|---|---|
| Fluoroimide | 10 parts by mass |
| Xylene | 70 parts by mass |
| N-methylpyrrolidone | 10 parts by mass |
| Mixture of polyoxyethylene nonylphenyl ether | 10 parts by mass |
| and calcium alkylbenzene sulfonate | |

The above ingredients are uniformly mixed for dissolution to give an emulsifiable concentrate formulation.

**Formulation Example 4**

| | |
|---|---|
| Fluoroimide | 3 parts by mass |
| Clay powder | 82 parts by mass |
| Diatomite powder | 15 parts by mass |

The above ingredients are uniformly mixed and then pulverized to give a dust formulation.

### Example 1

### Test for wheat leaf blotch (Septoria tritici, KUK-1-21 strain) :

The formulation produced in Formulation Example 1 was adjusted to predetermined concentrations and these prepared agrochemical liquids were applied to wheat plants in pots at a rate equivalent to 1000 L/ha with a spray gun. After the agrochemical treatment, the wheat pots were kept outdoors for 1 day or 7 days, and then spray-inoculated with wheat leaf blotch pathogen *Septoria tritici* (1 × 10⁶ spores/mL). After that, the wheat pots were kept in a greenhouse, in which the conditions favored the development of the disease. Three weeks after the inoculation, the lesion area index (0-10) was determined for the evaluation of the control effect. The results are shown in Table 1.

**Table 1**

| Agrochemical | Conc. ppm | Control rate | |
|---|---|---|---|
| | | Inoculated at 1 day post-treatment | Inoculated at 7 days post-treatment |
| Fluoroimide | 500 | NT | 65 |
| | 250 | 95 | NT |
| | 125 | 84 | NT |
| | 62.5 | 62 | NT |
| Non-treatment (lesion area index/0-10) | | (4.8) | |

For the wheat plants inoculated a day after the treatment, all the doses tested, even as low as 62.5 ppm, were highly effective. The dose of 500 ppm was still highly effective even 7 days after the treatment.

### Example 2

### Test for wheat glume blotch (Septoria nodorum):

The formulation produced in Formulation Example 1 was adjusted to predetermined concentrations and these prepared agrochemical liquids were applied to wheat plants in pots at a rate equivalent to 1000 L/ha with a spray gun. After the agrochemical treatment, the wheat pots were kept outdoors for 1 day or 7 days, and then spray-inoculated with wheat leaf blotch pathogen *Septoria nodorum* (2.4 × 10⁶ spores/mL). After that, the wheat pots were kept in a greenhouse, in which the conditions favored the development of the disease.

Ten days after the inoculation, the number of lesions per leaf was counted for the evaluation of the control effect. The results are shown in Table 2.

**Table 2**

| Agrochemical | Cone. | Control rate | |
|---|---|---|---|
| | ppm | Inoculated at 1 day post-treatment | Inoculated at 7 days post-treatment |
| Fluoroimide | 500 | 96 | 85 |
| | 250 | 94 | NT |
| | 125 | 90 | NT |
| | 62.5 | 63 | NT |
| Non-treatment | | (13.0/leaf)* | (6.3)* |

| | | | |
|---|---|---|---|
| *: the number of lesions per leaf in the non-treatment plot | | | |

For the wheat plants inoculated a day after the treatment, all the doses tested, even as low as 62.5 ppm, were highly effective. The dose of 500 ppm was still highly effective even 7 days after the treatment.

### Example 3

### Test for wheat eyespot (Pseudocercosporella herpotrichoides) :

The formulation produced in Formulation Example 1 was adjusted to predetermined concentrations and these prepared agrochemical liquids were applied to wheat plants in pots at a predetermined rate with a spray gun. After air-drying, the wheat pots were spray-inoculated with a spore suspension of wheat eyespot pathogen *Pseudocercosporella herpotrichoides* (4.2 × 10⁶ spores/mL). After that, the wheat pots were kept in a greenhouse, in which the conditions favored the development of the disease. Three weeks after the inoculation, the percentage of stems with lesions was determined for the evaluation of the control effect. The results are shown in Table 3.

**Table 3**

| Agrochemical | Conc. ppm | Control rate Inoculated after treatment and air-drying |
|---|---|---|
| Fluoroimide | 500 | 95 |
| | 250 | 80 |
| | 125 | 56 |
| Percentage of stems with lesions in non-treatment plot | | 10.50% |

The doses of 250 ppm or more were highly effective.

As is clear from the above results, fluoroimide is not only highly effective for controlling leaf blotch, which is an obstacle to stable cereal production in Europe, but also effective against other diseases, and therefore highly applicable to the field of concern.

## Claims

1. A method for controlling plant diseases, **characterized by** applying an agrochemical comprising fluoroimide or an agrochemically acceptable salt thereof to a cereal plant, soil in the vicinity of the cereal plant grown, or a seed of the cereal plant.

2. The method according to claim 1, wherein the cereal plant is wheat or barley.

3. The method according to claim 1 or 2, wherein the application is foliar application.

4. The method according to any of claims 1 to 3, wherein fluoroimide or a salt thereof is applied at a rate of 100 g/ha to 5000 g/ha.

5. The method according to any of claims 1 to 4, wherein the plant disease pathogen is
(a1) *Ascochyta tritici* (a causal agent of Ascochyta leaf spot of wheat),
(a2) *Blumeria graminis* (a causal agent of powdery mildew of cereals),
(a3) *Cladosporium herbarum* (a causal agent of black mold),
(a4) *Cochliobolus sativus* (a causal agent of poaceous spot blotch),
(a5) *Epicoccum* spp.,
(a6) *Erysiphe graminis* (a causal agent of powdery mildew of wheat and barley),
(a7) *Fusarium graminearum* (a causal agent of Fusarium ear blight of wheat and barley),
(a8) *Fusarium culmorum* (a causal agent of root rot),
(a9) *Gaeumannomyces graminis* (a causal agent of take-all root rot),
(a10) *Leptosphaeria nodorum* (a causal agent of glume blotch),
(a11) *Microdochium nivale* (a causal agent of pink snow mold),
(a12) *Pseudocercospora herpotrichoides,*
(a13) *Pseudocercosporella herpotrichoides* (a causal agent of eyespot),
(a14) *Puccinia striiformis* (a causal agent of rust),
(a15) *Puccinia triticina* (a causal agent of leaf rust),
(a16) *Puccinia hordei* (a causal agent of dwarf leaf rust of barley),
(a17) *Puccinia recondita* (a causal agent of leaf rust of wheat),
(a18) *Pyrenophora graminea* (a causal agent of stripe),
(a19) *Pyrenophora teres* (a causal agent of net blotch),
(a20) *Pyrenophora tritici repentis* (a causal agent of yellow leaf spot of wheat),
(a21) *Ramularia collo-cygni* (a causal agent of physiological leaf spots),
(a22) *Rhizoctonia solani* (a causal agent of root rot/stem rot),
(a23) *Rhizoctonia cerealis* (a causal agent of yellow patch),
(a24) *Rhynchosporium secalis* (a causal agent of scald),
(a25) *Septoria nodorum* (a causal agent of glume blotch of wheat),
(a26) *Septoria tritici* (a causal agent of leaf blotch),
(a27) *Stagonospora nodorum* (a species of the class Loculoascomycetes),
(a28) *Tilletia caries* (a causal agent of stinking smut),
(a29) *Typhula incarnata* (a causal agent of snow mold),
(a30) *Ustilago avenae* (a causal agent of loose smut of oat) or
(a31) *Ustilago nuda* (a causal agent of loose smut of wheat).

6. The method according to any of claims 1 to 4, wherein the plant disease pathogen is
(a3) *Cladosporium herbarum* (a causal agent of black mold),
(a4) *Cochliobolus sativus* (a causal agent of poaceous spot blotch),
(a5) *Epicoccum* spp.,
(a7) *Fusarium graminearum* (a causal agent of Fusarium ear blight of wheat and barley),
(a8) *Fusarium culmorum* (a causal agent of root rot),
(a9) *Gaeumannomyces graminis* (a causal agent of take-all root rot),
(a10) *Leptosphaeria nodorum* (a causal agent of glume blotch),
(a11) *Microdochium nivale* (a causal agent of pink snow mold),
(a12) *Pseudocercospora herpotrichoides,*
(a13) *Pseudocercosporella herpotrichoides* (a causal agent of eyespot),
(a18) *Pyrenophora graminea* (a causal agent of stripe),
(a19) *Pyrenophora teres* (a causal agent of net blotch),
(a20) *Pyrenophora tritici repentis* (a causal agent of yellow leaf spot of wheat),
(a21) *Ramularia collo-cygni* (a causal agent of physiological leaf spots),
(a24) *Rhynchosporium secalis* (a causal agent of scald),
(a25) *Septoria nodorum* (a causal agent of glume blotch of wheat),
(a26) *Septoria tritici* (a causal agent of leaf blotch),
(a27) *Stagonospora nodorum* (a species of the class Loculoascomycetes),
(a28) *Tilletia caries* (a causal agent of stinking smut),
(a29) *Typhula incarnata* (a causal agent of snow mold),
(a30) *Ustilago avenae* (a causal agent of loose smut of oat) or
(a31) *Ustilago nuda* (a causal agent of loose smut of wheat).

7. The method according to any of claims 1 to 4, wherein the plant disease pathogen is
(a7) *Fusarium graminearum* (a causal agent of Fusarium ear blight of wheat and barley),
(a10) *Leptosphaeria nodorum* (a causal agent of glume blotch),
(a12) *Pseudocercospora herpotrichoides,*
(a13) *Pseudocercosporella herpotrichoides* (a causal agent of eyespot),
(a25) *Septoria nodorum* (a causal agent of glume blotch of wheat) or
(a26) *Septoria tritici* (a causal agent of leaf blotch).

8. The method according to any of claims 1 to 7, wherein the agrochemical is in a liquid form.
